# EUROPÄISCHE PATENTSCHRIFT

(11) **EP 1 323 463 B1**
(45) Veröffentlichungstag und Bekanntmachung des Hinweises auf die Patenterteilung: **20.09.2006**
(21) Anmeldenummer: 02028013.7
(22) Anmeldetag: 13.12.2002
(51) Int. Cl.: B01D 67/00, B01D 71/02, C25D 1/08, B01D 69/02

(54) **Verfahren sowie Vorrichtung zur Herstellung eines Metallmembranfilters**
Method and device for the production of a metal membrane
Procédé et appareil pour fabriquer une membrane métallique

(30) Priorität: 31.12.2001 DE 10164214
(43) Veröffentlichungstag der Anmeldung: 02.07.2003
(60) Teilanmeldung: 06010055.9
(73) Patentinhaber: Gesellschaft für Schwerionenforschung mbH, 64291 Darmstadt (DE)
(72) Erfinder: Dobrev, Dobri, Dr., 64291 Darmstadt (DE); Vetter, Johann, Dr., 64291 Darmstadt (DE); Neumann, Reinhard, Prof., 64291 Darmstadt (DE); Angert, Norbert, Dr., 64291 Darmstadt (DE)
(74) Vertreter: Boeters, Hans Dietrich

(56) Entgegenhaltungen:
- EP-A- 0 252 545
- DE-A- 3 631 804
- DE-A- 19 812 850
- US-A- 4 397 715
- US-A- 4 496 434
- US-A- 4 575 406
- US-A- 5 240 587

## Beschreibung

Die Erfindung betrifft ein Verfahren sowie eine Vorrichtung zur Herstellung eines Metallfilters gemäß der Gattung der unabhängigen Ansprüche.

Feinporige Kunststoffmembranfilter werden aus Kunststoffolien hergestellt, indem die Kunststoffolien mit Ionenstrahlen beschossen werden. Bei diesem Beschuß entstehen singuläre Ionenstrahlspuren, die anschließend aus der Kunststoffolie herausgelöst werden können, so daß Filterporen eines einheitlichen Durchmessers entstehen und diese Kunststoffmembranfilter zum Trennen von Partikeln mit definiertem mittleren Durchmesser eingesetzt werden können. Dieses Verfahren kann jedoch nicht auf Metallfolien bzw. Metallmembranen angewandt werden, da Ionenspuren beim Durchgang durch dünne Metallfolien keine ätzbaren Ionenspuren hinterlassen, wie es bei Kunststoffolien der Fall ist.

Die Herstellung von Metallfiltern durch Abformung eines porösen Substrats mittels elektrochemischer Beschichtung bei gleichzeitiger Durchströmung der Poren durch ein galvanisch inaktives Medium ist aus EP 0 252 545 A1 bekannt. Hierdurch werden geradlinige, zylindrische und glattwandige Poren im Metallfilter mit exakt gleichem Querschnitt wie die Substratporen erreicht. Nach diesem Stand der Technik kann man auch ein Kunststoffsubstrat perforiert durch beispielsweise eine Radiation Beam-Technik verwenden, d.h. mit statistisch verteilten Poren.

Die US-4397715-A offenbart ein Verfahren zur Herstellung von Metallfiltern durch Abformung eines porösen Substrats durch elektrochemische Beschichtung bei gleichzeitiger Durchströmung der Poren durch das galvanisch aktive Medium.

Aufgabe der Erfindung ist es, ein Verfahren sowie eine Vorrichtung zur Herstellung eines Metallmembran filters anzugeben, wobei der Filter geometrisch einem Kunststoffmembranfilter entspricht, welcher mittels Ionenstrahl und Auslösetechnik der Ionenstrahlspuren entstanden ist, entspricht, wobei das Verfahren kostengünstig die Struktur eines Kunststoffmembranfilters auf ein Metallmembranfilter übertragen soll und die Vorrichtung zur Herstellung desselben eine schnelle Anpassung an unterschiedliche Metallmembranfiltermaterialien ermöglichen soll.

Diese Aufgabe wird mit dem Gegenstand der unabhängigen Ansprüche gelöst. Vorteilhafte Weiterbildungen der Erfindung ergeben sich aus den abhängigen Ansprüchen.

Die Erfindung stellt ein Metallmembranfilter bereit mit geradlinigen, zylindrischen Filterporen, die in einer Dichte von einer einzigen Filterpore pro cm² bis zu 10⁷ Filterporen pro cm² statistisch auf der Metallmembranfilterfläche verteilt angeordnet sind. Der mittlere Durchmesser kann von einigen 10 Nanometer bis zu mehreren Mikrometern für alle Poren des Metallmembranfilters eingestellt werden. Dabei weist der Metallmembranfilter ein galvanisch mit geradlinigen zylindrischen Filterporen abgeschiedenes Metall oder eine entsprechend galvanisch abgeschiedene Metallegierung auf.

Derartige geradlinig und zylindrisch galvanisch abgeschiedene Filterporen zeichnen sich durch eine glatte Innenwandstruktur aus, die mit einer Ätztechnik aufgrund des isotropen Fortschreitens der Ätzfront in einer Metallmembran nicht erreicht werden kann. Diese bei einer galvanischen Abscheidung gebildeten geradlinigen zylindrischen Filterporen mit ihren glatten Innenwandungen haben darüber hinaus den Vorteil, daß eine eindeutige Selektion von vorgegebener Partikelgröße mit Hilfe dieser Metallmembranfilter erreicht werden kann. Weiterhin ergibt sich aus der feinkristallinen Struktur eines galvanisch abgeschiedenen Metallmembranfilters der Vorteil einer hohen Elastizität und einer hohen Erosionsfestigkeit der Metallmembranfilter und damit eine erhöhte Lebensdauer beim Betrieb und Einsatz dieser Filter.

In einer bevorzugten Ausführungsform des Metallmembranfilters weist dieses ein galvanisch mit geradlinigen zylindrischen Filterporen abgeschiedenes Nickel, Kupfer, Gold, Platin oder entsprechend abgeschiedene Legierungen derselben auf. Dabei ist bei den Edelmetallen Gold und Platin der hohe Widerstand gegen Korrosion, Oxidation und Erosion bekannt, während bei den weniger edlen Metallen Kupfer und Nickel die niedrigen Kosten einen großen Vorteil bilden.

Eine weitere bevorzugte Ausführungsform sieht vor, daß die Filterporen einseitig auf ihre Oberseite einen abgerundeten oder konischen Öffnungsrand und auf der gegenüberliegenden Rückseite einen scharfkantigen Öffnungsrand aufweisen. Diese Formgebung wird dadurch erreicht, daß die Rückseite nach Herstellung des Metallmembranfilters poliert wird, so daß ein scharfkantiger Übergang von der rückseitigen Ebene zu den geradlinigen und zylindrischen Filterporen ermöglicht wird. Die der Rückseite gegenüberliegende Öffnung weist einen abgerundeten oder konischen Öffnungsrand auf, der durch die galvanischen Abscheidungsparameter beeinflußt werden kann.

Ein Verfahren zur Herstellung eines Metallmembranfilters weist folgende Verfahrensschritte auf Zunächst wird ein Kunststoffmembranfilter mit Filterporen hergestellt. Anschließend wird auf diesem Kunststoffmembranfilter mit Filterporen einseitig eine elektrisch leitende Schicht abgeschieden, womit ein metallbeschichtetes Kunststoffmembranfilter entsteht. Dabei ist die Metallschicht so dünn, daß sie auf dem Kunststoffmembranfilter die Öffnungsränder scharf abbilden. Bei dem sich anschließenden galvanischen Abscheiden eines Metallmembranfilterkörpers werden die Filterporen des metallbeschichteten Kunststoffmembranfilters mit einer galvanisch inaktiven Flüssigkeit durchströmt. Die Strömungsrichtung wird dabei von der unbeschichteten zu der beschichteten Seite des metallbeschichteten Kunststoffmembranfilters eingestellt. Somit werden während des galvanischen Abscheidens eines Metallmembranfilterkörpers die Filterporen freigehalten und setzen sich nicht zu. Die Folge des Durchströmens der Filterporen mit einer galvanisch inaktiven Flüssigkeit liefert eine deutliche Erhöhung der elektrochemischen Polarisation in der Nähe der Porenöffnungen. Dazu wird die Flüssigkeit mit einigem Überdruck von der nichtmetallbeschichteten Seite der Kunststoffmembran durch Einstellung eines hydrostatichen Überdrucks beaufschlagt.

Bei einer bevorzugten Durchführung des Verfahrens wird durch die Poren hindurch reines Wasser oder der indifferente Elektrolyt mit den Innenwandungen der Poren in Kontakt gebracht, so daß die Ionenkonzentration in der Nähe der Porenöffnungen verringert wird und die Konzentrationspolarisation erhöht wird. Es können auch Lösungen mit solchen Ionen verwendet werden, die mit den Metallionen Komplexe bilden und auf diese Weise deutliche Unterschiede im Abscheidungspotential in der Nähe der Porenöffnungen und auf der Fläche der Metallbeschichtungen ausbilden. Eine weitere Möglichkeit für die durchströmenden Flüssigkeiten liegt darin, spezifisch adsorbierte Substanzen in sehr niedriger Konzentration einzusetzen, wodurch die Abscheidung um die Porenöffnungen herum verhindert wird.

Somit wird vorteilhaft mit diesem Verfahren erreicht, daß praktisch die Struktur des Kunststoffmembranfilters durch einen entstehenden Metallmembranfilterkörper kopiert wird. Nach Erreichen einer vorgesehenen Dicke für den Metallmembranfilterkörper, die zwischen 10 und 200 µm liegen kann, wird das Kunststoffmembranfilter von dem Metallmembranfilter abgelöst und somit ein funktionsfähiges hochelastisches und mechanisch widerstandsfähiges Metallmembranfilter zur Verfügung gestellt.

In einem weiteren bevorzugten Durchführungsbeispiel des Verfahrens wird zunächst zum Herstellen eines Kunststoffmembranfilters eine Kunststoffolie mit einem Ionenstrahl bestrahlt. Diese Kunststoffolie besteht vorzugsweise aus einem Polycarbonat wie einem Polybiphenolcarbonat. Derartige Carbonate haben den Vorteil, daß sich die Lösungsmöglichkeit in Methanol stark erhöht, wenn dieser Kunststoff von einem schweren Ionenstrahl durchdrungen wurde. Die Kunststoffolie selbst weist vorzugsweise eine Dicke von 30 bis 150 µm auf, wobei für geringe Porendurchmesser von einigen 10 Nanometern eine niedrige Dicke um 30 µm bevorzugt wird, während für größere Durchmesser im Mikrometerbereich eine Dicke von 100 bis 150 µm eingesetzt wird.

Zur Darstellung derartiger Ionenspuren in einer Kunststoffolie werden vorzugsweise Ionenstrahlen aus U²³⁸-Ionen auf eine kinetische Energie von 10 bis 15 MeV/u beschleunigt und anschließend auf die Kunststoffolie gerichtet. Dabei entsteht statistisch verteilt auf der bestrahlten Fläche der Kunststoffolie eine einstellbare bzw. vorgegebene Ionenstrahlspurdichte, welche die Voraussetzung für eine entsprechende geradlinige zylindrische Filterporendichte ist.

Um aus den Ionenstrahlspuren in der Kunststoffolie geradlinige zylindrische Filterporen herzustellen, wird in einer bevorzugten Ausführungsform der Erfindung die bestrahlte Kunststoffolie mit einer Lösung aus 6-molarer Natronlauge gemischt mit bis zu 10 % Methanol bei Raumtemperatur behandelt, wobei entlang der Ionenstrahlspuren Filterporen mit völlig bleichmäßigem Durchmesser entstehen.

Das einseitige Abscheiden einer elektrisch leitenden Schicht auf dem somit entstandenen Kunststoffmembranfilter kann mittels Aufstäubungsverfahren, das auch Sputtern genannt wird, erfolgen. Bei diesem Aufstäubungsverfahren wird ein Metall, das vorzugsweise dem Metall des zu bildenden Metallmembranfilters entspricht, mittels Elektronen oder Ionenstrahl zerstäubt und auf der Oberseite des Kunststoffmembranfilters abgeschieden. Bei diesem Aufstäuben kann durchaus auch die Innenwandung der Kunststoffilterporen teilweise mitbeschichtet werden, so daß nach dem Ablösen des Kunststoffmembranfilters von dem Metallmembranfilter der Metallmembranfilter ringförmige Vorsprünge auf seiner Unterseite aufweist, die mit einem einfachen Polierschritt entfernt werden können. Bei diesem Polierschritt entstehen gleichzeitig scharfkantige Öffnungsränder für die Filterporen auf der Rückseite des Metallmembranfilters.

Während der galvanischen Abscheidung eines Metallmembranfilterkörpers auf der beschichteten Seite des Kunststoffmembranfilters wird durch einen hydrostatischen Überdruck zwischen 100 Pa und 1000 Pa das Durchströmen der inaktiven Flüssigkeit durch die Filterporen aufrechterhalten. Bevorzugte Flüssigkeiten, die unter Überdruck auf der Rückseite bzw. der unbeschichteten Seite des Kunststoffmembranfilters zur Verfügung gestellt werden, sind reines Wasser, Schwefelsäure, schweflige Säure, Ethylendiaminsäure oder Mischungen derselben.

Bei dem galvanischen Abscheiden eines Metallmembranfilterkörpers aus Gold oder einer Goldlegierung auf dem metallbeschichteten Kunststoffmembranfilter wird ein Goldsulfitbad, das 10 mg/cm³ bis 15 mg/cm³ Gold oder Goldlegierung aufweist, bei einer Badtemperatur zwischen 20 und 60 °C eingesetzt. Dieses hat den Vorteil, daß eine feinstrukturierte Goldfolie mit entsprechenden Filterporen auf dem metallbeschichteten Kunststoffmembranfilter ausgebildet wird.

Bei einem weiteren Durchführungsbeispiel des Verfahren ist es vorgesehen, daß bei dem galvanischen Abscheiden eines Metallmembranfilterkörpers aus Platin oder einer Platinlegierung auf dem metallbeschichteten Kunststoffmembranfilter ein saures oder alkalisches Platinbad mit 1 mg/cm³ bis 20 mg/cm³ Platin oder Platinlegierung eingesetzt wird. Dabei werden die niedrigen Konzentrationen des Platin in dem Platinbad besonders bei sauren Platinbädern angewandt und die hohen Konzentrationen des Platins im Elektrolytbad sind dann von Vorteil, wenn ein alkalisches Platinbad zum Einsatz kommt.

Bei einem weiteren Durchführungsbeispiel des Verfahrens wird bei dem galvanischen Abscheiden eines Metallmembranfilterkörpers aus Kupfer oder einer Kupferlegierung auf dem metallbeschichteten Kunststoffmembranfilter ein Kupfersulfatbad bei einer Badtemperatur zwischen 20 und 60 °C und einer Stromdichte zwischen 20 mA/cm² und 60 mA/cm² eingesetzt. Im Verhältnis zu den Stromdichten, die für Platin oder Gold eingesetzt werden, sind die Stromdichten für Kupfer relativ hoch, so daß in wesentlich kürzerer Zeit dickere Metallmembranfilterkörper und damit Metallmembranfilter herstellbar werden.

Schließlich kann in einem weiteren Durchführungsbeispiel des Verfahrens der Erfindung bei dem galvanischen Abscheiden eines Metallmembranfilterkörpers aus Nickel oder einer Nickellegierung ein Nickelsulfamatbad bei einer Badtemperatur zwischen 40 und 60 °C und einer Stromdichte zwischen 15 mA/cm² und 25 mA/cm² eingesetzt werden. Mit diesen Parametern konnten Nickelmembranfilter hergestellt werden, die sich durch ihre hohe Erosions- und Oxidationsfestigkeit auszeichnen.

Für das Ablösen des Kunststoffmembranfilters von dem Metallmembranfilterkörper zur Herstellung eines Metallmembranfilters hat sich die Anwendung von Dichlormethan bewährt, wenn das Kunststoffmaterial ein Polycarbonat ist

Wie bereits oben erwähnt, kann die Rückseite des Metallmembranfilters nach dem Ablösen des Kunststoffmembranfilters mechanisch nachpoliert werden, um beispielsweise unerwünschte Vorsprünge, die beim Aufstäuben der metallischen Abscheidung auf dem Kunststoffmembranfilter in den Filterporen entstanden sind, zu beseitigen.

Ein weiterer Aspekt der Erfindung betrifft eine Vorrichtung zur Herstellung eines Metallmembranfilters. Eine derartige Vorrichtung weist einen Behälter für die Aufnahme eines galvanischen Bades auf. Dieser Behälter ist mit einer Anode ausgestattet, die über einen abnehmbaren Deckel in das galvanische Bad eingeführt werden kann. In seinem Bodenbereich weist der Behälter eine auf Kathodenpotential liegende Halterung für einen metallischen Kunststoffmembranfilter auf. Stromaufwärts von diesem Halter ist eine Druckdurchführung für eine galvanisch inaktive Flüssigkeit angeordnet, die mit einem Druckbehälter über ein Absperrventil verbunden ist. Der Druckbehälter selbst ist gegenüber dem Behälter mit dem galvanischen Bad höhenverstellbar angeordnet, so daß eine vorgegebene Druckhöhe eingehalten werden kann. Der Bereich der Verstellbarkeit des Überdruckes liegt zwischen 100 und 1000 Pa, was einer Höhendifferenz des Flüssigkeitsniveaus in dem Druckbehälter gegenüber dem Flüssigkeitsniveau in dem galvanischen Bad von etwa 10 bis 100 mm entspricht.

Um die Konzentration an Metallionen im galvanischen Bad gleichmäßig aufrechtzuerhalten, kann in einer bevorzugten Ausführungsform der Vorrichtung die Anode Gold, Platin, Kupfer, Nickel oder Legierungen derselben aufweisen. Die Vorrichtung verfügt über den Druckbehälter und den Behälter für das galvanische Bad hinaus eine Gleichstromquelle für eine einstellbare Kathodenstromdichte zwischen 10 mA/cm² und 100 mA/cm². Dieser Kathodenstromdichtebereich reicht aus, um die unterschiedlichen Metallmembranfiltermaterialien auf das metallbeschichtete Kunststoffmembranfilter aufzubringen.

Zusammenfassend kann festgestellt werden, daß mit der vorliegenden Vorrichtung die Herstellung von Metallmembranfiltern möglich ist, die Filterporen mit folgenden Eigenschaften aufweisen, nämlich Filterporen, die geradlinig und zylindrisch mit relativ glatten Innenwandungen und mit Durchmessern wahlweise von einigen 10 Nanometern bis zu mehreren Mikrometern und mit Flächendichten wahlweise von nur 1 Pore pro cm² bis 10⁷ Poren pro cm² herstellbar sind. Außerdem hat das Verfahren und die Vorrichtung den Vorteil, daß ein Metallmembranfilter durch direkte elektrochemische bzw. galvanische Abformung von Filterporen von einer Ionenspur-Polymermembran möglich wird.

Ein vergleichbares Ergebnis ließe sich nur durch ein wesentlich komplexeres Verfahren, das mindestens zwei Abformungsschritte aufweist, erreichen. So ist zum Beispiel vorstellbar, daß zur Herstellung von Mikrostrukturen zunächst die Poren aufgeätzter Ionenspuren die Polymerfolien mit Metall aufgefüllt werden und gleichzeitig eine Trägerschicht für die feinen Metallfäden in den Poren einseitig abgeschieden wird. Anschließend kann eine derartige Struktur von dem ursprünglichen Kunststoff mit Poren befreit werden und nun mit einem zweiten metallischen Material in das Metallmembranfilter von der ersten Abformung abgeformt werden. Eine derartige Doppelabformung hätte den Nachteil, daß aufeinanderfolgend zwei verschiedene Metalle zu verwenden sind, wobei die erste Metallstruktur im Verlauf des Prozesses geopfert werden muß.

Voraussetzung für ein derartiges Verfahren ist, daß die beiden Metalle sich in ihren chemischen Eigenschaften erheblich unterscheiden, damit die erste Metallstruktur entfernt werden kann, ohne daß die zweite Metallstruktur beschädigt wird, aus der schließlich das endgültige Metallmembranfilter bestehen soll. Im Unterschied zu der vorliegenden Erfindung wird das ursprüngliche Kunststoffmembranfilter nach der Abscheidung des ersten Metalls aufgelöst, so daß die auf diese Weise erzeugte Anordnung freistehende parallele dünne Drähte aufweist, die anschließend mit dem zweiten Metall abgeformt werden müssen. Die Abformung kann jedoch nur gelingen, wenn die Oberfläche des ersten Metalls passiviert wird, was wegen der sehr kleinen Drahtdimensionen von wenigen 10 Nanometern bis zu einigen µm schwierig, in vielen Fällen fast unmöglich ist.

Statt des oben erwähnten Sputterns kann das Kunststoffmembranfilter auch durch Aufdampfen mit einer dünnen Metallbeschichtung versehen werden. Ohne die erfindungsgemäße Idee des Durchströmens der Filterporen während der galvanischen Abscheidung würde während der elektromechanischen Abscheidung auf der leitfähigen Seite der Ausgangsstruktur, die der Anode gegenübersteht, ein Verschluß der Filterporen erfolgen, sobald eine begrenzte Dicke erreicht ist. Durch die vorliegende Erfindung werden jedoch die Porenöffnungen freigehalten, so daß in dem galvanisch abgeschiedenen Material geradlinige zylindrische Filterporen gebildet werden können.

Das vorliegende erfindungsgemäße Verfahren hat darüber hinaus den Vorteil, daß es einfach und ohne große Schwierigkeiten anwendbar ist, daß keine komplizierten Apparate oder andere Hilfsmittel erforderlich werden und daß geeignete Metallmembranfilter aus jedem beliebigen Metall, das sich elektrochemisch abscheiden läßt, hergestellt werden können.

Die Erfindung wird nun anhand von Ausführungsformen mit Bezug auf die beigefügten Zeichnungen näher erläutert.
Fig. 1 zeigt einen schematischen Querschnitt durch einen Abschnitt eines erfindungs gemäß hergestellten Metallmembranfilters mit einer Filterpore.
Fig. 2 zeigt einen schematischen Querschnitt durch einen Abschnitt eines erfindungs gemäß hergestellten Metallmembranfilters mit einer weiteren Filtert pore.

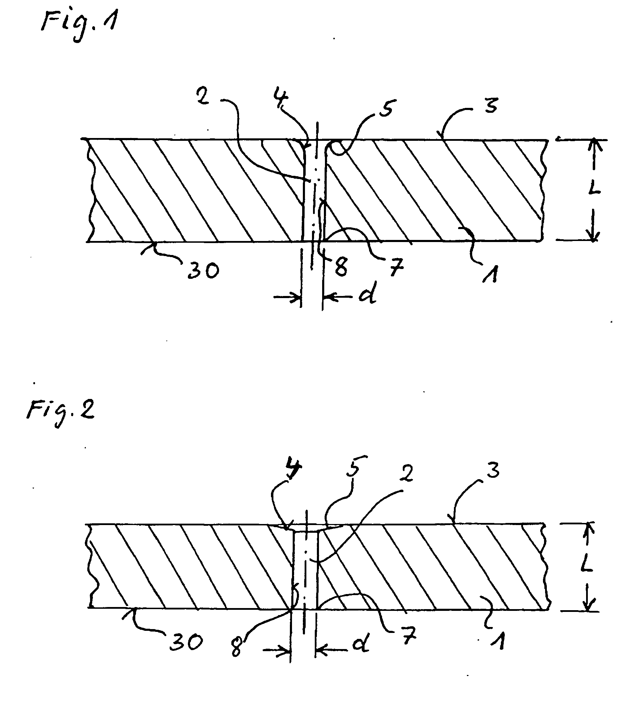

Figuren 2 bis 7 zeigen Verfahrensschritte im Rahmen der erfindungs gemäßen Herstellung eines Metallmembranfilters

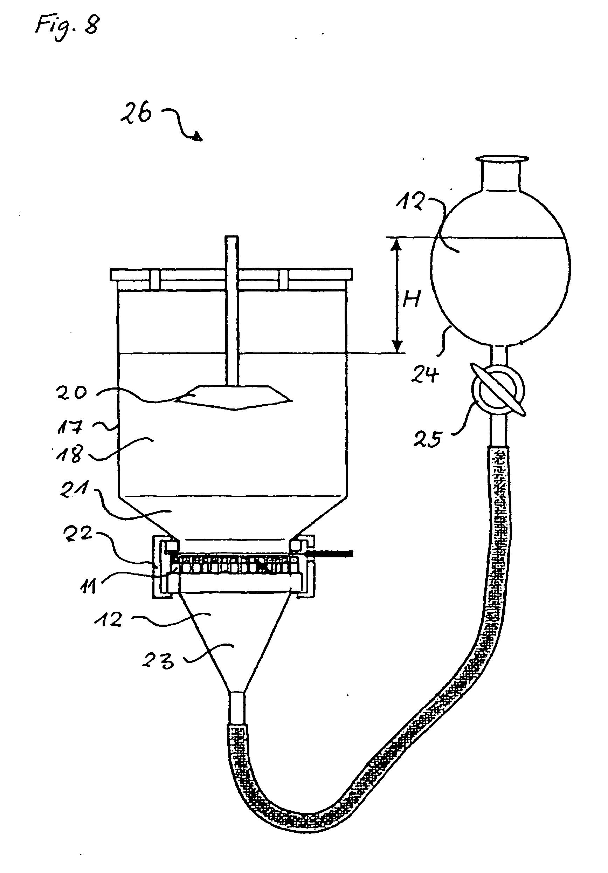

Fig. 8 zeigt eine Prinzipskizze einer erfindungsgemäßen Vorrichtung zur Herstellung eines Metallmembranfilters.

Fig. 1 zeigt einen schematischen Querschnitt durch einen Abschnitt eines Metallmembranfilters 1 mit einer Filterpore 2. Das Bezugszeichen 3 kennzeichnet eine Metallmembranfilterfläche, wobei die Dichte der Filterporen 2 zwischen einer einzigen Filterpore pro cm² bis hin zu 10⁷ Filterporen pro cm² der Metallmembranfilterfläche 3 betragen kann. Das Bezugszeichen 4 kennzeichnet die Oberseite der Filterpore 2, die in der Ausführungsform nach Fig. 1 einen abgerundeten Öffnungsrand 5 aufweist. Die Filterpore 2 reicht von der Metallmembranfilterfläche 3 bis zur Rückseite 30 des Metallmembranfilters und ist geradlinig und zylindrisch mit glatten Innenwänden 8 ausgebildet bei einer Dicke L des Metallmembranfilters zwischen 5 µm und 200 µm, vorzugsweise zwischen 8 µm und 50 µm.

Der Durchmesser d der Filterpore 2 liegt zwischen wenigen 10 Nanometern und mehreren Mikrometern. Die Rückseite der Filterpore 2 weist einen scharfkantigen Öffnungsrand 7 auf. Dieser scharfkantige Öffnungsrand 7 wird durch Polieren der Rückseite 30 des Metallmembranfilters 1 verwirklicht. Das Material des Metallmembranfilters 1 besteht vorzugsweise aus Gold, Platin, Kupfer, Nickel oder Legierungen derselben. Eine Edelmetallausführung in Gold wurde bei Raumtemperatur in einer Dicke von 10 bis 12 µm hergestellt. Vergleichsweise wurde bei 55 °C ein weiteres Metallmembranfilter aus Gold hergestellt, das sich gegenüber dem Metallmembranfilter, hergestellt bei Raumtemperatur, durch eine bessere Duktilität unterschied. Der Überdruck wurde für die galvanisch inaktive Flüssigkeit, für die in diesem Fall Wasser eingesetzt wurde, auf 100 Pa eingestellt.

Im Falle einer Abscheidung eines Metallmembranfilters 1 aus Platin wurde ein größerer hydrostatischer Druck von etwa 300 Pa eingestellt, wobei einerseits ein saurer Platinelektrolyt eingesetzt wurde, der ein sprödes Metallmembranfilter lieferte und damit die Dicke auf wenige Mikrometer emittierte, wobei die Sprödigkeit auf hohe Wasserstoffeinschlüsse zurückzuführen ist.

Ein Metallmembranfilter 1 aus Platin, der aus einem alkalischen Elektrolyten aufgewachsen wurde, ergibt so gut wie keine Wasserstoffeinschlüsse in der Abscheidungsschicht und die Membranen werden äußerst duktil. Damit war es möglich, wesentlich dickere Metallmembranfilter 1 herzustellen. Dabei führte die Erhöhung der Temperatur zu größer werdenden Kristalliten innerhalb der Abscheidungsschicht, was teilweise die Innenwandung der Poren in dem Metallmembranfilter 1 deformierte.

Fig. 2 zeigt einen schematischen Querschnitt durch einen Abschnitt eines Metallmembranfilters 1 mit einer weiteren Filterpore 2. Komponenten mit gleichen Funktionen wie in Fig. 1 werden mit gleichen Bezugszeichen gekennzeichnet und nicht extra erörtert.

Die Ausführungsform nach Fig. 2 unterscheidet sich von der Ausführungsform nach Fig. 1 durch einen konischen Öffnungsrand 5 auf der Oberseite 4 der Filterpore 2. Ein derartiger flacher Konus des Öffnungsrandes 5 der Filterpore 2 kann durch Variation der Strömungsgeschwindigkeit durch die Filterpore 2 beim Herstellen des Metallmembranfilters 1 realisiert werden. Auch in dieser Ausführungsform nach Fig. 1 ist die Rückseite des Metallmembranfilters 1 poliert, um ringförmige Vorsprünge am Öffnungsrand 7 auf der Rückseite der Filterpore 2 einzuebnen. Sowohl die Fig. 1 als auch die Fig. 2 sind keine maßstäblichen Darstellungen, sondern extreme Vergrößerungen, um die Form der Filterporen 2 darzustellen. Insbesondere ist das Verhältnis des Filterporendurchmessers d zu der Dicke L des Metallmembranfilters 1 in den Darstellungen der Figuren 1 und 2 übertrieben groß gezeichnet.

In der Ausführungsform nach Fig. 2 wurden Metallmembranfilter 1 aus unedlen Metallen wie Kupfer und Nickel hergestellt. Im Falle eines Kupfermembranfilters wird bei einem hydrostatischen Druck von 350 Pa eine 25 %-ige Schwefelsäure als galvanisch inaktive Flüssigkeit eingesetzt. Innerhalb von 30 Minuten Abscheidezeit bei Raumtemperatur kann eine Dicke L von 20 µm erreicht werden. Ferner können Metallmembranfilter 1 mit einer galvanisch inaktiven Flüssigkeit aus reinem Wasser bei eine hydrostatischen Druck von 1000 Pa und 500 Pa hergestellt werden, wobei der höhere Wasserfluß bei 1000 Pa regelmäßigere zylindrische Filterporen erzeugt. Jedoch ist die Oberfläche des Metallmembranfilters aufgrund der Verdünnung des Elektrolyten entlang der Kathode rauher.

Bei zu niedrigem hydrostatischen Druck unter 100 Pa werden einige der Filterporen mit Metall gefüllt, so daß teilweise keine durchgängigen Poren entstehen. Es hat sich gezeigt, daß sich bei geringfügiger Zumischung von Ethylendiaminsäure um die Filterporenöffnungen herum Kupferkomplexe bilden, die die chemische Polarisation erhöhen, wobei das Metall bei den angelegten Spannungen nicht reduziert wird und damit verbesserte Filterporenqualitäten erreicht werden. Ähnlich wie Metallmembranfilter aus Kupfer können auch Metallmembranfilter 1 aus Nickel hergestellt werden, wobei eine Dicke L von 10 µm in einem Nickelsulfamatbad bei 55 °C und 1000 Pa Überdruck erreicht wird.

Die Figuren 2 bis 7 zeigen Verfahrensschritte im Rahmen der Herstellung eines Metallmembranfilters 1. Komponenten mit gleichen Funktionen wie in den vorhergehenden Figuren werden mit gleichen Bezugszeichen gekennzeichnet und nicht extra erörtert.

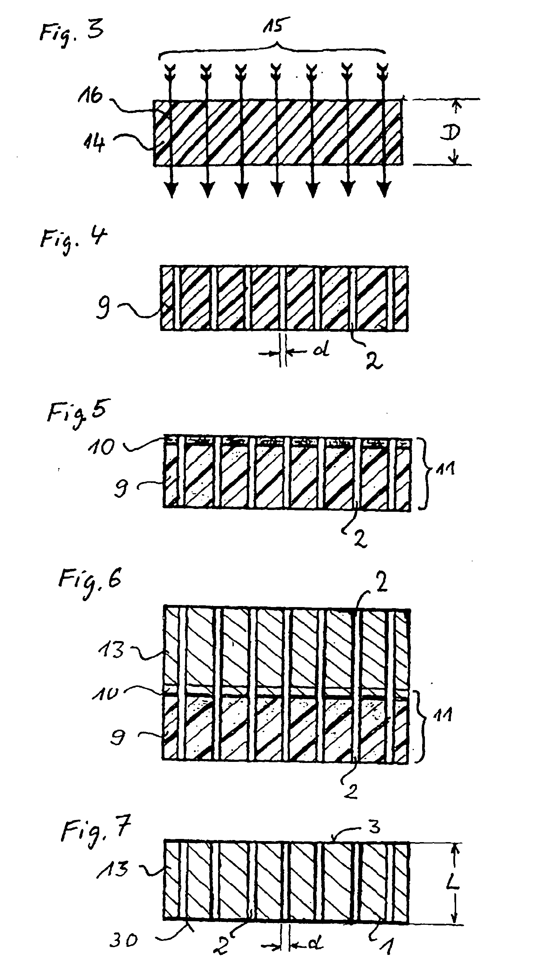

Fig. 3 zeigt einen schematischen Querschnitt durch einen Abschnitt einer Kunststoffolie 14, die mit U²³⁸-Ionen eines Ionenstrahls 15 durchdrungen wird. Das Bezugszeichen 16 kennzeichnet eine Ionenstrahlspur, die sich geradlinig durch die polymere Kunststoffolie aus Polycarbonat erstreckt. Das Material im Bereich der Ionenstrahlspuren wird aus der Folie beispielsweise durch eine 6-molare Natronlaugelösung, die 10 % Methanol enthält, herausgelöst.

Fig. 4 zeigt das Ergebnis des Herauslösens der Ionenspuren von Fig. 3 in schematischem Querschnitt. Es ergeben sich geradlinige zylindrische Filterporen, die sich quer durch das Kunststoffmaterial erstrecken, so daß sich ein Kunststoffmembranfilter bildet.

Fig. 5 zeigt das Kunststoffmembranfilter der Fig. 4 mit einer elektrisch leitenden Metallschicht 10 in schematischem Querschnitt. Diese elektrisch leitende Metallschicht 10 ist erforderlich, da die Kunststoffmetallfilteroberfläche nicht für eine galvanische Abscheidung geeignet ist. Deshalb wird zunächst eine Metallschicht 10 aus dem Metall des künftigen Metallmembranfilters auf den Kunststoff durch Sputtern oder Aufdampfen aufgebracht. Dabei kann auch ein Teil der Filterporen 2 beschichtet werden, was im Ergebnis zu ringförmigen Vorsprüngen auf der Rückseite des zu bildenden Metallmembranfilters führen kann. Derartige ringförmige oder hohlzylinderförmige Vorsprünge können jedoch nach dem Ablösen des Kunststoffmembranfilters durch Polieren der Rückseite des Metallmembranfilters egalisiert werden.

Fig. 6 zeigt in einem schematischen Querschnitt, wie sich die Filterporen 2 des Kunststoffmembranfilters in einem galvanisch abgeschiedenen Metallmembranfilter auf der metallischen Schicht 10 fortsetzt, wenn ein ständiges Durchströmen der Filterporen während der galvanischen Abscheidung gewährleistet wird. Für Kupfer wird diese Abscheidung bei Raumtemperatur mit einer Stromdichte von beispielsweise 4 A/dm² durchgeführt, während für Goldmembranfilter ein Goldsulfitbad eingesetzt wird, das beispielsweise 12,5 g/l Gold bei einer Stromdichte von 0,4 A/dm² bei Raumtemperatur durchgeführt wird. Eine Platinabscheidung kann, wie oben bereits erwähnt, sowohl in einem sauren Platinbad, das 2 g/l Platin enthält, oder einem alkalischen Platinbad, das 15 g/l Platin enthält, durchgeführt werden, wobei die jeweiligen Stromdichten 2 A/dm² und 1 A/dm² entsprechen. Schließlich kann Nickel bei Temperaturen von 55 °C aus einem Nickelsulfamatbad bei konstanter Stromdichte von 20 A/dm² galvanisch abgeschieden werden, so daß sich der Metallmembranfilterkörper 13 in Fig. 6 bildet, der noch mit dem Kunststoffmetallfilter über die abgeschiedene Metallschicht 10 verbunden ist.

Fig. 7 zeigt einen schematischen Querschnitt durch ein Metallmembranfilter 1, wobei zwischenzeitlich die Kunststoffolie entfernt wurde. Zum Entfernen der Kunststoffolie wird ein Bichlormethan eingesetzt, so daß anschließend ein selbstträgendes Metallmembranfilter vorliegt.

Fig. 8 zeigt eine Prizipskizze einer Vorrichtung 26 zur Herstellung eines Metallmembranfilters. Komponenten mit gleichen Funktionen wie in den vorhergehenden Figuren werden mit den gleichen Bezugszeichen gekennzeichnet und nicht extra erörtert.

Das Bezugszeichen 17 kennzeichnet einen Behälter, der ein galvanisches Bad 18 aufnehmen kann. In das galvanische Bad 18 ragt eine Anode 20, die elektrisch isoliert durch einen Dekkel des Behälters gehalten wird. Im Bodenbereich 21 des Behälters 17 ist eine Halterung 22 angeordnet, welche das mit einer elektrisch leitenden Schicht beschichtete Kunststoffmembranfilter derart hält, daß die elektrisch leitende Beschichtung des Kunststoffmembranfilters zur Anode hin ausgerichtet ist. Die Halterung 22 hält zusätzlich eine Druckzuführung 23, die mit einer galvanisch inaktiven Flüssigkeit 12 gefüllt ist und trichterförmig ausgebildet ist, so daß sie die galvanisch inaktive Flüssigkeit 12 gleichmäßig verteilt auf der Unterseite des Kunststoffmembranfilters durch die auf der Membranfilteroberseite verteilten Filterporen drücken kann.

Über eine flexible Leitung ist die Druckzuführung mit einem Druckbehälter 24 verbunden, der in seinem Bodenbereich ein Absperrventil 25 aufweist, das dafür sorgt, daß mit Einsetzen der Abscheidungsstromdichte im galvanischen Bad 18 durch Öffnen des Absperrventils 25 ein hydrostatischer Überdruck dafür sorgt, daß eine kontinuierliche Durchströmung der Filterporen erfolgt.

Das Niveau der galvanisch inaktiven Flüssigkeit 12 in dem Druckbehälter 24 ist um die Höhendifferenz H höher angeordnet als das Niveau des galvanischen Bades 18. Diese Höhendifferenz H kann durch vertikales Verschieben des Druckbehälters 24 variiert werden. Das Absperrventil 25 ist unterhalb des Niveaus des galvanischen Bades 18 angeordnet. Das Material der Anode ist dem abzuscheidenden Material für das Metallmembranfilter angepaßt. Dazu weist die Anode entweder Gold, Platin, Kupfer, Nickel oder ein anderes elektrolytisch abscheidbares Metall auf, so daß auch Legierungen der genannten Metalle eingeschlossen sind. Als Elektrolyt wird in den Fällen für Kupfer, Nickel und Gold eine Schwefelsäure oder eine schweflige Säure eingesetzt, während für die Abscheidung von Platin auch alkalische Elektrolyte in Frage kommen, zumal saure galvanische Bäder dazu neigen, in die Platinabscheidung Wasserstoff einzubauen, was das Platinmetall und damit das Metallmembranfilter versprühen.

### Bezugszeichenliste

- 1: Metallmembranfilter
- 2: Filterporen
- 3: Metallmembranfilterfläche
- 4: Oberseite der Filterpore
- 5: abgerundeter Öffnungsrand der Filterpore
- 7: scharfkantiger Öffnungsrand der Filterpore
- 8: Innenwandstruktur der Filterpore
- 9: Kunststoffmembranfilter
- 10: elektrisch leitende Schicht
- 11: metallbeschichtetes Kunststoffmembranfilter
- 12: galvanisch inaktive Flüssigkeit
- 13: Metallmembranfilterkörper
- 14: Kunststoffolie
- 15: Ionenstrahl
- 16: Ionenstrahlspuren
- 17: Behälter
- 18: galvanisches Bad
- 20: Anode
- 21: Bodenbereich
- 22: Halterung
- 23: Druckzuführung
- 24: Druckbehälter
- 25: Absperrventil
- 26: Vorrichtung
- 30: Rückseite des Metallmembranfilters
- 31: Kathode

- d: mittlerer Filterporendurchmesser
- D: Dicke der Kunststoffolie
- H: Höhendifferenz
- L: Dicke des Metallmembranfilters

## Patentansprüche

1. Verfahren zur Herstellung eines Metallmembranfilters mit geradlinigen, zylindrischen Filterporen (2), die in einer Dichte von einer einzigen Filterpore (2) pro Quadratzentimeter bis zu 10⁷ Filterporen (2) pro Quadratzentimeter statistisch auf der Metallmembranfilterfläche (3) verteilt angeordnet sind und einen mittleren Durchmesser (d) von einigen zehn Nanometern bis zu mehreren Mikrometern aufweisen, wobei das Verfahren folgende Verfahrensschritte aufweist:
- Herstellen eines Kunststoffmembranfilters (9) mit Filterporen (2) mittels Erzeugen singulärer Ionenstrahlspuren in einer Kunststofffolie (14) und Herauslösen von geradlinigen, zylindrischen Filterporen entlang der Ionenstrahlspuren in der Kunststofffolie (14),
- einseitiges Abscheiden einer elektrisch leitenden Schicht (10) auf dem Kunststoffmembranfilter (9) zu einem metallbeschichteten Kunststoffmembranfilter (11),
- Durchströmen der Filterporen (2) des metallbeschichteten Kunststoffmembranfilters (11) mit einer galvanisch inaktiven Flüssigkeit (12) von der unbeschichteten zu der beschichteten Seite des metallbeschichteten Kunststoffmembranfilters (11), während des
- galvanischen Abscheidens eines Metall- oder Metalllegierungs-Membranfilterkörpers (13) auf der metallbeschichteten Seite des Kunststoffmembranfilters (11) aus einem galvanischen Bad (18) unter
- Einstellen eines hydrostatischen Überdrucks auf der unbeschichteten Seite zur kontinuierlichen Durchströmung der Filterporen, indem eine Höhendifferenz zwischen dem Niveau der galvanisch inaktiven Flüssigkeit in einem Druckbehälter (24) und dem Niveau des galvanischen Bades (18) variiert wird, und
- Ablösen des Kunststoffmembranfilters (11) von dem Metallmembranfilter (1).

2. Verfahren nach Anspruch 1,
**dadurch gekennzeichnet, daß**
zum Herstellen eines Kunststoffmembranfilters (9) eine Kunststofffolie (14) zunächst mit einem Ionenstrahl (15) bestrahlt wird.

3. Verfahren nach Anspruch 2,
**dadurch gekennzeichnet, daß**
die Kunststoffolie (14) ein Polybiphenolcarbonat aufweist.

4. Verfahren nach einem der vorhergehenden Ansprüche,
**dadurch gekennzeichnet, daß**
die Kunststoffolie (14) eine Dicke (D) von 30 bis 150 Mikrometern aufweist.

5. Verfahren nach einem der vorhergehenden Ansprüche,
**dadurch gekennzeichnet, daß**
der Ionenstrahl (15) U²³⁸-Ionen aufweist, die auf eine kinetische Energie von 10 bis 15 MeV/u beschleunigt werden und singuläre Ionenstrahlspuren (16) in der Kunststoffolie (14) bilden.

6. Verfahren nach einem der vorhergehenden Ansprüche,
**dadurch gekennzeichnet, daß**
zur Herstellung des Kunststoffmembranfilters (9) der Kunststoff entlang der Ionenstrahlspuren (16) in der Kunststoffolie (14) zu geradlinigen, zylindrischen Filterporen (2) mit einer Lösung aus 6-molarer Natronlauge im Gemisch mit bis zu 10 % Methanol bei Raumtemperatur herausgelöst wird.

7. Verfahren nach einem der vorhergehenden Ansprüche,
**dadurch gekennzeichnet, daß**
das einseitige Abscheiden einer elektrisch leitenden Schicht (10) auf dem Kunststoffmembranfilter (9) zu einem metallbeschichteten Kunststoffmembranfilter (11) mittels Sputtern erfolgt.

8. Verfahren nach einem der vorhergehenden Ansprüche,
**dadurch gekennzeichnet, daß**
bei dem einseitigen Abscheiden einer elektrisch leitenden Schicht (10) auf dem Kunststoffmembranfilter (9) ein Metall oder eine Metallegierung abgeschieden wird, das bzw. die dem Metallmaterial des Metallmembranfilters entspricht.

9. Verfahren nach einem der vorhergehenden Ansprüche,
**dadurch gekennzeichnet, daß**
für ein Durchströmen der Filterporen (2) des metallbeschichteten Kunststoffmembranfilters (11) mit einer galvanisch inaktiven Flüssigkeit (12) von der unbeschichteten zu der beschichteten Seite des metallbeschichteten Kunststoffmembranfilters die galvanisch inaktive Flüssigkeit (12) einem Überdruck auf der unbeschichteten Seite des Kunststoffmembranfilters (9) zwischen 100 Pa und 1.000 Pa ausgesetzt wird.

10. Verfahren nach einem der vorhergehenden Ansprüche,
**dadurch gekennzeichnet, daß**
als galvanisch inaktive Flüssigkeiten (12) Wasser, Schwefelsäure, schweflige Säure, Ethylendiaminsäure oder Mischungen derselben eingesetzt werden.

11. Verfahren nach einem der vorhergehenden Ansprüche,
**dadurch gekennzeichnet, daß**
bei dem galvanischen Abscheiden eines Metallmembranfilterkörpers (13) aus Gold oder einer Goldlegierung auf der metallbeschichteten Seite des Kunststoffmembranfilters (11) ein Goldsulfitbad, das 10 mg/cm³ bis 15 mg/cm³ Gold oder Goldlegierung aufweist, bei einer Badtemperatur zwischen 20 und 60 °C eingesetzt wird.

12. Verfahren nach einem der vorhergehenden Ansprüche,
**dadurch gekennzeichnet, daß**
bei dem galvanischen Abscheiden eines Metallmembranfilterkörpers (13) aus Platin oder einer Platinlegierung auf der metallbeschichteten Seite des Kunststoffmembranfilters (11) ein saures oder alkalisches Platinbad mit 1 mg/cm³ bis 20 mg/cm³ Platin oder Platinlegierung eingesetzt wird.

13. Verfahren einem der vorhergehenden Ansprüche,
**dadurch gekennzeichnet, daß**
bei dem galvanischen Abscheiden eines Metallmembranfilterkörpers (13) aus Kupfer oder einer Kupferlegierung auf der metallbeschichteten Seite des Kunststoffmembranfilters (11) ein Kupfersulfatbad bei einer Badtemperatur zwischen 20 und 60 °C und einer Stromdichte zwischen 20 mA/cm² und 60 mA/cm² eingesetzt wird.

14. Verfahren nach einem der vorhergehenden Ansprüche,
**dadurch gekennzeichnet, daß**
bei dem galvanischen Abscheiden eines Metallmembranfilterkörpers (13) aus Nickel oder einer Nickellegierung auf der metallbeschichteten Seite des Kunststoffmembranfilters (11) ein Nickelsulfamatbad bei einer Badtemperatur zwischen 40 und 60 °C und einer Stromdichte zwischen 15 mA/cm² und 25 mA/cm² eingesetzt wird.

15. Verfahren nach einem der vorhergehenden Ansprüche,
**dadurch gekennzeichnet, daß**
der Kunststoffmembranfilter (9) von dem Metallmembranfilterkörper (13) durch Auflösen des Kunststoffes in Dichlormethan entfernt wird.

16. Verfahren nach einem der vorhergehenden Ansprüche,
**dadurch gekennzeichnet, daß**
nach dem Ablösen des Kunststoffmembranfilters (9) die zuvor auf der Kunststoffmembran aufliegende Rückseite des Metallmembranfilters (1) mechanisch poliert wird.

17. Vorrichtung zur Herstellung eines Metallmembranfilters (1), wobei die Vorrichtung einen Behälter (17) für die Aufnahme eines galvanischen Bades (18) aufweist, der einen Deckel (19) mit einer Anode (20) aufweist, und der in seinem Bodenbereich (21) eine auf Katodenpotential liegende Halterung (22) zum Halten eines metallbeschichteten Kunststoffmembranfilters (11) und auf der Anode (20) abgewandten Seite des Kunststoffmembranfilters (11) eine Druckzuführung (23) für eine galvanisch inaktive Flüssigkeit (12) aufweist, die mit einem Druckbehälter (24) über ein Absperrventil (25) verbunden ist, wobei der Druckbehälter (24) zur Variation einer Höhendifferenz zwischen dem Niveau der galvanisch inaktiven Flüssigkeit (12) im Druckbehälter (24) und dem Niveau des galvanischen Bades (18) eine vertikale Verschiebbarkeit aufweist.

18. Vorrichtung Anspruch 17,
**dadurch gekennzeichnet, daß**
die Anode (20) Gold, Platin, Kupfer, Nickel oder Legierungen derselben aufweist.

19. Vorrichtung nach Anspruch 17 oder Anspruch 18,
**dadurch gekennzeichnet, daß**
die Vorrichtung (26) eine Gleichstromquelle für eine einstellbare Kathodenstromdichte zwischen 10 mA/cm² und 100 mA/cm² aufweist.

## Claims

1. Method for the production of a metal membrane filter having rectilinear, cylindrical filter pores (2), which are arranged statistically distributed on the metal membrane filter surface (3) in a density of from a single filter pore (2) per square centimetre up to 10⁷ filter pores (2) per square centimetre and which have an average diameter (d) of from a few tens of nanometres up to several micrometres, wherein the method comprises the following method steps:
- production of a plastics membrane filter (9) having filter pores (2) by producing discrete ion beam tracks in a plastics film (14) and dissolving out rectilinear, cylindrical filter pores along the ion beam tracks in the plastics film (14),
- deposition, on one side of the plastics membrane filter (9), of an electrically conductive layer (10) to form a metal-coated plastics membrane filter (11),
- flow, through the filter pores (2) of the metal-coated plastics membrane filter (11), of a liquid (12) that is inactive with respect to electro-deposition, from the uncoated to the coated side of the metal-coated plastics membrane filter (11); during the
- electro-deposition of a metal or metal alloy membrane filter body (13) onto the metal-coated side of the plastics membrane filter (11) from an electro-dispersion bath (18) by
- adjusting a hydrostatic positive pressure on the uncoated side for continuous flow through the filter pores by varying a height difference H between the level, in the pressure vessel (24), of the liquid that is inactive with respect to electro-deposition and the level of the electro-deposition bath (18), and
- dissolution of the plastics membrane filter (11) away from the metal membrane filter (1).

2. Method according to claim 1,
**characterised in that**,
for production of a plastics membrane filter (9) by producing of discrete ion beam tracks, a plastics film (14) is first irradiated with an ion beam (15).

3. Method according to claim 2,
**characterised in that**
the plastics film (14) comprises a polybiphenolcarbonate.

4. Method according to one of the preceding claims,
**characterised in that**
the plastics film (14) has a thickness (D) of from 30 to 150 micrometres.

5. Method according to one of the preceding claims,
**characterised in that**
the ion beam (15) comprises U²³⁸ ions, which are accelerated to a kinetic energy of from 10 to 15 MeV/u and form discrete ion beam tracks (16) in the plastics film (14).

6. Method according to one of the preceding claims,,
**characterised in that**,
for production of the plastics membrane filter (9), the plastics material along the ion beam tracks (16) in the plastics film (14) is dissolved out to form rectilinear, cylindrical filter pores (2) using a solution of 6M sodium hydroxide solution mixed with up to 10 % methanol at room temperature.

7. Method according to one of the preceding claims,
**characterised in that**
the deposition of an electrically conductive layer (10) on one side of the plastics membrane filter (9) to form a metal-coated plastics membrane filter (11) is carried out by means of sputtering.

8. Method according to one of the preceding claims,
**characterised in that**,
on deposition of an electrically conductive layer (10) on one side of the plastics membrane filter (9), a metal or metal alloy is deposited which corresponds to the metal material of the metal membrane filter.

9. Method according to one of the preceding claims,
**characterised in that**,
for flow, through the filter pores (2) of the metal-coated plastics membrane filter (11), of a liquid (12) that is inactive with respect to electro-deposition, from the uncoated to the coated side of the metal-coated plastics membrane filter, the liquid (12) that is inactive with respect to electro-deposition is subjected to a positive pressure on the uncoated side of the plastics membrane filter (9) of between 100 Pa and 1,000 Pa.

10. Method according to one of the preceding claims,
**characterised in that**
water, sulphuric acid, sulphurous acid, ethylenediaminetetraacetic acid or mixtures thereof are used as the liquid (12) that is inactive with respect to electro-deposition.

11. Method according to one of the preceding claims,
**characterised in that**,
on electro-deposition of a metal membrane filter body (13) of gold or a gold alloy onto the metal-coated side of the plastics membrane filter (11), a gold sulphite bath containing from 10 mg to 15 mg of gold or gold alloy per cm³ is used at a bath temperature of between 20 and 60 °C.

12. Method according to one of the preceding claims,
**characterised in that**,
on electro-deposition of a metal membrane filter body (13) of platinum or a platinum alloy onto the metal-coated side of the plastics membrane filter (11), an acid or alkaline platinum bath containing from 1 mg to 20 mg of platinum or platinum alloy per cm³ is used.

13. Method according to one of the preceding claims,
**characterised in that**,
on electro-deposition of a metal membrane filter body (13) of copper or a copper alloy onto the metal-coated side of the plastics membrane filter (11), a copper sulphate bath is used at a bath temperature of between 20 and 60 °C and at a current density of between 20 mA/cm² and 60 mA/cm².

14. Method according to one of the preceding claims,
**characterised in that**,
on electro-deposition of a metal membrane filter body (13) of nickel or a nickel alloy onto the metal-coated side of the plastics membrane filter (11), a nickel sulphamate bath is used at a bath temperature of between 40 and 60°C and at a current density of between 15 mA/cm² and 25 mA/cm².

15. Method according to one of the preceding claims,
**characterised in that**
the plastics membrane filter (9) is removed from the metal membrane filter body (13) by dissolving away the plastics material in dichloromethane.

16. Method according to one of the preceding claims,
**characterised in that**,
after removal of the plastics membrane filter (9), the reverse side of the metal membrane filter (1), which previously laid on the plastics membrane, is mechanically polished.

17. Apparatus for the production of a metal membrane filter (1), wherein the apparatus comprises a vessel (17) for accommodating an electro-deposition bath (18), which vessel (17) has a cover (19) having an anode (20) and has, in its bottom region (21), under cathode potential, a holder (22) for holding a metal-coated plastics membrane filter (11) and, on the side, opposed from the anode (20), of the metal-coated plastics membrane filter (11), a pressure inlet (23) for a liquid (12) that is inactive with respect to electro-deposition, which pressure inlet (23) is connected to a pressure vessel (24) by way of a shut-off valve (25), wherein the pressure vessel (24) comprises ability to vertical displacement for variation of a height difference between the level, in the pressure vessel (24), of the liquid that is inactive with respect to electro-deposition and the level of the electro-deposition bath (18).

18. Apparatus according to claim 17,
**characterised in that** the anode (20) comprises gold, platinum, copper, nickel or alloys thereof.

19. Apparatus according to claim 17 or claim 18,
**characterised in that**
the apparatus (26) has a direct-current source for an adjustable cathode current density of between 10 mA/cm² and 100 mA/cm².

## Revendications

1. Procédé de fabrication d'un filtre à membrane métallique avec des pores de filtration (2) cylindriques rectilignes statistiquement distribués à la surface du filtre à membrane métallique (3) selon une densité allant d'un seul pore de filtration (2) par centimètre carré à 10⁷ pores de filtration (2) par centimètre carré et présentant un diamètre (d) moyen allant d'une dizaine de nanomètres à plusieurs micromètres, ledit procédé comprenant les étapes suivantes :
- fabrication d'un filtre à membrane plastique (9) avec des pores de filtration (2) par génération de traces singulières de rayonnement ionique dans un film plastique (14) et par évidement de pores de filtration cylindriques rectilignes le long des traces de rayonnement ionique dans le film plastique (14),
- séparation d'une couche conductrice électrique (10) sur une face du filtre à membrane plastique (9) pour former un filtre à membrane plastique métallisé (11),
- effluvation des pores de filtration (2) du filtre à membrane plastique métallisé (11) par un liquide galvaniquement inactif (12) de la face non métallisée à la face métallisée du filtre à membrane plastique métallisé (11), pendant la
- séparation galvanique depuis un bain galvanique (18) d'un corps de filtre à membrane métallique ou en alliage métallique (13) sur la face métallisée du filtre à membrane plastique (11), par
- réglage d'une surpression hydrostatique sur la face non métallisée pour l'effluvation continue des pores de filtration, en modifiant une différence de hauteur entre le niveau du liquide galvaniquement inactif dans un récipient sous pression (24) et le niveau du bain galvanique (18), et
- détachement du filtre à membrane plastique (11) du filtre à membrane métallique (1).

2. Procédé selon la revendication 1,
**caractérisé en ce que**
pour la fabrication d'un filtre à membrane plastique (9) par génération de traces singulières de rayonnement ionique, un film plastique (14) est d'abord exposé à un faisceau ionique (15).

3. Procédé selon la revendication 2,
**caractérisé en ce que**
le film plastique (14) comprend un polybiphénolcarbonate.

4. Procédé selon l'une des revendications précédentes,
**caractérisé en ce que**
le film plastique (14) présente une épaisseur (D) comprise entre 30 et 150 micromètres.

5. Procédé selon l'une des revendications précédentes,
**caractérisé en ce que**
le faisceau ionique (15) comprend des ions U²³⁸ accélérés vers une énergie cinétique de 10 à 15 MeV/u et formant des traces singulières de rayonnement ionique (16) dans le film plastique (14).

6. Procédé selon l'une des revendications précédentes,
**caractérisé en ce que**
pour la fabrication du filtre à membrane plastique (9), la matière plastique est détachée à température ambiante le long des traces de rayonnement ionique (16) dans le film plastique (14) avec une solution d'une lessive de soude hexamolaire mélangée avec jusqu'à 10 % de méthanol, pour former des pores de filtration (2) cylindriques rectilignes.

7. Procédé selon l'une des revendications précédentes,
**caractérisé en ce que**
la séparation d'une couche conductrice électrique (10) sur une face du filtre à membrane plastique (9) pour former un filtre à membrane plastique métallisé (11) est exécutée par pulvérisation.

8. Procédé selon l'une des revendications précédentes,
**caractérisé en ce que**
lors de la séparation d'une couche conductrice électrique (10) sur une face du filtre à membrane plastique (9), un métal ou un alliage métallique est séparé, lequel correspond au matériau métallique du filtre à membrane métallique.

9. Procédé selon l'une des revendications précédentes,
**caractérisé en ce que**
pour une eff-luvation des pores de filtration (2) du filtre à membrane plastique métallisé (11) par un liquide galvaniquement inactif (12) de la face non métallisée à la face métallisée du filtre à membrane plastique métallisé, le liquide galvaniquement inactif (12) est soumis à une surpression comprise entre 100 Pa et 1.000 Pa sur la face non métallisée du filtre à membrane plastique (9).

10. Procédé selon l'une des revendications précédentes,
**caractérisé en ce que**
de l'eau, de l'acide sulfurique, de l'acide sulfureux, de l'acide éthylènediamine ou des mélanges de ceux-ci sont employés comme liquides galvaniquement inactifs (12).

11. Procédé selon l'une des revendications précédentes,
**caractérisé en ce que**
pour la séparation galvanique d'un corps de filtre à membrane métallique (13) en or ou en alliage d'or sur la face métallisée du filtre à membrane plastique (11), un bain de sulfite d'or comprenant de 10 mg/cm³ à 15 mg/cm³ d'or ou d'alliage d'or est mis en oeuvre à une température de bain comprise entre 20 et 60 °C.

12. Procédé selon l'une des revendications précédentes,
**caractérisé en ce que**
pour la séparation galvanique d'un corps de filtre à membrane métallique (13) en platine ou en alliage de platine sur la face métallisée du filtre à membrane plastique (11), un bain de platine acide ou alcalin comprenant de 1 mg/cm³ à 20 mg/cm³ de platine ou d'alliage de platine est mis en oeuvre.

13. Procédé selon l'une des revendications précédentes,
**caractérisé en ce que**
pour la séparation galvanique d'un corps de filtre à membrane métallique (13) en cuivre ou en alliage de cuivre sur la face métallisée du filtre à membrane plastique (11), un bain de sulfate de cuivre est mis en oeuvre à une température de bain comprise entre 20 et 60 °C et avec une densité de courant comprise entre 20 mA/cm² et 60 mA/cm².

14. Procédé selon l'une des revendications précédentes,
**caractérisé en ce que**
pour la séparation galvanique d'un corps de filtre à membrane métallique (13) en nickel ou en alliage de nickel sur la face métallisée du filtre à membrane plastique (11), un bain de sulfamate de nickel est mis en oeuvre à une température de bain comprise entre 40 et 60 °C et avec une densité de courant comprise entre 15 mA/cm² et 25 mA/cm².

15. Procédé selon l'une des revendications précédentes,
**caractérisé en ce que**
le filtre à membrane plastique (9) est extrait du corps de filtre à membrane métallique (13) par dissolution du plastique dans du bichlorométhane.

16. Procédé selon l'une des revendications précédentes,
**caractérisé en ce que**
après détachement du filtre à membrane plastique (9), la face de revers du filtre à membrane métallique (1) qui reposait auparavant sur la membrane plastique est mécaniquement polie.

17. Dispositif pour la fabrication d'un filtre à membrane métallique (1), ledit dispositif comportant un récipient (17) de collecte d'un bain galvanique (18) comprenant un couvercle (19) avec une anode (20), et comprenant dans sa zone de fond (21) une bride (22) ajustée sur le potentiel de cathode pour le maintien d'un filtre à membrane plastique métallisé (11), et une amenée sous pression (23) sur la face du filtre à membrane plastique (11) opposée à l'anode (20) pour un liquide galvaniquement inactif (12), laquelle est raccordée à un récipient sous pression (24) via une vanne d'arrêt (25), le récipient sous pression (24) étant déplaçable verticalement pour la modification d'une différence de hauteur entre le niveau du liquide galvaniquement inactif (12) dans le récipient sous pression (24) et le niveau du bain galvanique (18).

18. Dispositif selon la revendication 17,
**caractérisé en ce que**
l'anode (20) comprend de l'or, du platine, du cuivre, du nickel ou des alliages de ceux-ci.

19. Dispositif selon la revendication 17 ou 18,
**caractérisé en ce que**
le dispositif (26) comporte une source de courant continu pour une densité de courant de cathode réglable entre 10 mA/cm² et 100 mA/cm².
